# EUROPÄISCHE PATENTSCHRIFT

(11) **EP 2 206 663 B1**
(45) Veröffentlichungstag und Bekanntmachung des Hinweises auf die Patenterteilung: **20.03.2013**
(21) Anmeldenummer: 09015409.7
(22) Anmeldetag: 14.12.2009
(51) Int. Cl.: B65G 51/04, B65G 51/06, B65G 51/28, G07D 11/00

(54) **Verfahren und Vorrichtung zur Übergabe von Banknoten an eine Rohrpostanlage**
Method and device for transferring bank notes to a pneumatic delivery carrier tube
Procédé et dispositif destinés au transfert de billets vers une cartouche tubulaire

(30) Priorität: 07.01.2009 DE 102009003973
(43) Veröffentlichungstag der Anmeldung: 14.07.2010
(73) Patentinhaber: Wincor Nixdorf International GmbH, 33106 Paderborn (DE)
(72) Erfinder: Baitz, Günter, 13629 Berlin (DE); Malke, Wolfgang, 13465 Berlin (DE)
(74) Vertreter: Richly, Erik

(56) Entgegenhaltungen:
- WO-A1-98/37521
- GB-A- 2 211 823
- GB-A- 2 211 825
- NL-A- 9 101 488

## Beschreibung

Die Erfindung betrifft ein Verfahren zur Übergabe von Banknoten von einem Terminal zu einer Rohrpostanlage, wobei die Banknoten entlang einer vorgegebenen Transportbahn einer Kartusche der Rohrpostanlage zugeführt werden.

Ferner betrifft die Erfindung eine Vorrichtung zur Übergabe von Banknoten von einem Terminal zu einer Rohrpostanlage mit Mitteln zum Transportieren der Banknoten von dem Terminal zu einer Kartusche der Rohrpostanlage.

Aus der DE 100 02 641 A1 ist eine Vorrichtung zur Übergabe von Banknoten von einem Terminal zu einer Rohrpostanlage bekannt, die eine Banderoliermaschine aufweist, damit die Banknoten als Banknotenstapel der Rohrpostanlage zuführbar sind. Als Transportmittel für die Banknoten ist eine geneigte Führungsbahn vorgesehen, auf der die Banknoten von einer Geldvereinzelungsanlage bis in eine Verteileinrichtung zur Weitergabe an die Rohrpostanlage gleiten. Entlang der Führungsbahn werden die Banknotenstapel bis hin zu einer offenen Kartusche der Rohrpostanlage transportiert. Nachteilig an der bekannten Vorrichtung ist, dass sie einen relativ großen Bauraum erfordert.

Aus der GB 2 211 823 A sind ein Verfahren und eine Vorrichtung zur Übergabe von Banknoten von einem Terminal zu einer Rohrpostanlage gemäß dem Oberbegriff der Patentansprüche 1 und 3 bekannt.

Aufgabe der vorliegenden Erfindung ist es, ein Verfahren und eine Vorrichtung zur Übergabe von Banknoten von einem Terminal zu einer Rohrpostanlage derart anzugeben, dass auf einfache Weise eine platzsparende und effektive Übergabe der Banknoten an eine Rohrpostanlage ermöglicht wird.

Gelöst wird diese Aufgabe mit einem Verfahren gemäß Patentanspruch 1.

Erfindungsgemäß werden Banknoten nach dem erfindungsgemäßen Verfahren entlang eines geradlinigen Transportweges aus einer Zuführposition außerhalb einer Kartusche der Rohrpostanlage in eine Endposition innerhalb der Kartusche verbracht. Dabei sind die Banknoten mittels eines Halters stets in einer definierten Lage gehalten. Mittels eines auf den Halter abgestimmten Schiebers werden die Banknoten dann unter Bildung einer Wölbung in die Kartusche gedrückt. Die Banknoten sind in dem Halter aufrecht angeordnet, das heißt die Ersteckungsebene der Banknoten verläuft senkrecht zur Transportrichtung. Das erfindungsgemäße Verfahren ermöglicht eine platzsparende und sichere Übergabe von Banknoten von einem Terminal zu einer Kartusche einer Rohrpostanlage.

Nach der Erfindung wird der Halter entlang einer Führungsbahn bewegt, die in einem ersten Bewegungsabschnitt der Banknote in Transportrichtung und die in einem anschließenden zweiten Bewegungsabschnitt der Banknote in einem Winkel zur Transportrichtung verläuft. In dem zweiten Bewegungsabschnitt öffnet sich der Halter unter Freigabe eines Durchgangs für die Banknoten in Richtung der Kartusche, so dass mittels des Schiebers die Banknoten durch eine Öffnung der Kartusche in dieselbe gedrückt werden können. Der Halter kann hierbei als Führungselement dienen, an dessen Fläche die Banknoten in Richtung der Öffnung der Kartusche abgleiten. Vorteilhaft kann hierdurch eine sichere Übergabe der Banknoten in die Kartusche erzielt werden.

Nach einer Weiterbildung der Erfindung wird der Halter in einem vorgespannten Zustand bewegt, wobei die Spannkraft entgegen der Transportrichtung gerichtet ist. Die Übergabe der Banknoten erfolgt mittels Beaufschlagung einer Stellkraft durch den Schieber, wobei gleichzeitig die Banknote und der Halter in Transportrichtung verschoben werden. Vorteilhaft kann allein durch Bewegung des Schiebers eine definierte Bewegung der Banknoten bzw. des Halters bewirkt werden, wobei am Ende dieses Transportweges die Banknote an die Kartusche übergeben wird.

Nach der Erfindung wird eine Anlagefläche des Halters, an der die Banknote flächig anliegt, in einem zweiten Bewegungsabschnitt aus einer linearen Transportbahn der Banknote herausgeschwenkt, so dass ein Weg freigegeben wird zum Eindrücken der Banknote in die Kartusche. Die Anlagefläche des Halters dient hierbei als Führungsfläche, entlang derer die Banknote in Richtung der Öffnung der Kartusche entlanggleiten kann. Vorteilhaft kann hierdurch eine definierte Wölbung der Banknote erreicht werden, die zum Eintritt derselben in eine schlitzförmige Öffnung der Kartusche erforderlich ist. Nachdem die Banknote bzw. mehrere Banknoten im gewölbten Zustand durch die Öffnung der Kartusche eingeführt worden ist, können sich die Banknoten innerhalb der Kartusche selbsttätig entspannen, so dass sie eine Endposition erreichen, in der sie im Wesentlichen eben angeordnet sind.

Gelöst wird diese Aufgabe auch mit einer Vorrichtung gemäß Patentanspruch 3.

Der Vorteil der erfindungsgemäßen Vorrichtung besteht insbesondere darin, dass eine platzsparende und sichere Übergabe von Banknoten von einem Terminal zu einer Kartusche einer Rohrpostanlage ermöglicht wird. Vorteilhaft wird durch eine abgestimmte Bewegung zwischen einem die Banknote haltenden Halter und einem Schieber die Banknote an die Kartusche übergeben. Der Halter hat die Funktion, die Banknote in einer definierten Position zu halten. Der Schieber hat die Funktion, die Banknote durch Aufbringen einer Stellkraft in Transportrichtung zu bewegen und durch die Öffnung der Kartusche in dieselbe einzubringen.

Erfindungsgemäß sind Transportmittel derart ausgebildet, dass der Halter in einem ersten Bewegungsabschnitt in Transportrichtung bewegt wird, wobei die Banknote an einer Anlagefläche des Halters anliegt. Nach einer Weiterbildung der Erfindung wird der Halter in einem folgenden zweiten Bewegungsabschnitt nach und nach aus einer Transportbahn herausgeschwenkt, so dass unter Einwirken einer Stellkraft des Schiebers die Banknote in einem gewölbten Zustand übergeht, in dem sie mittels des Schiebers durch eine schlitzartige Öffnung der Kartusche in dieselbe einbringbar ist. Durch das Ausschwenken des Halters wird somit ein das Eintreten der Banknote in die Kartusche fördernder Wölbungszustand ermöglicht. Zum anderen bildet der Halter zugleich eine Führungsfläche für die Banknote, damit ein sicherer Eintritt der Banknote in die Kartusche erzielt wird.

Nach der Erfindung ist der Halter in einer Kulissenführung beweglich gelagert, so dass der Halter einen definierten Bewegungsablauf durchführt.

Erfindungsgemäß ist der Halter winkelförmig ausgebildet, wobei ein erster Schenkel des halters eine Anlagefläche für die Banknote bildet und ein zweiter Schenkel in einer Kulisse geführt ist. Im Scheitelbereich des winkelförmigen Halters ist dieser schwenkbar gelagert, so dass die Anlagefläche in dem zweiten Bewegungsabschnitt der Banknote um einen spitzen Winkel verschwenkbar ist.

Nach einer Weiterbildung der Erfindung ist der Halter entgegen der Transportrichtung vorgespannt gelagert, so dass die Banknote stets in einer flachen Position gehalten ist.

Nach einer Weiterbildung der Erfindung ist eine Stapeleinrichtung vorgesehen, mittels derer einzeln zugeführte Banknoten an dem Halter gestapelt werden können. Die Stapeleinrichtung umfasst eine fensterförmige Aufnahme, in der die Banknoten vereinzelt zugeführt werden. Mittels des Schiebers werden die Banknoten jeweils in Transportrichtung aus der fensterförmigen Aufnahme gedrückt, so dass sie in einem Zwischenraum zwischen dem Halter und der fensterförmigen Aufnahme stapelbar sind. Dadurch, dass der Halter vorgespannt ist, werden die Stapel von Banknoten zwischen dem Halter einerseits und der fensterförmigen Aufnahme andererseits eingespannt.

Weitere Vorteile der Erfindung ergeben sich aus den weiteren Unteransprüchen.

Ein Ausführungsbeispiel der Erfindung wird nachfolgend anhand der Zeichnungen näher erläutert.

### Es zeigen:

- Figur 1: eine schematische Seitenansicht einer erfindungsgemäßen Vorrichtung, wobei eine Banknote aus dem Terminal in eine Zuführposition der Übergabevorrichtung verbracht wird,
- Figur 2: eine schematische Draufsicht auf die Übergabevorrichtung in einer Zuführposition eines Stapels von Banknoten,
- Figur 3: eine schematische Draufsicht auf die Übergabevorrichtung in einer Zwischenposition der Stapel von Banknoten,
- Figur 4: eine schematische Draufsicht der Übergabevorrichtung in einem aufgeschwenkten Zustand eines Halters der Übergabevorrichtung und
- Figur 5: eine schematische Draufsicht der Übergabevorrichtung in einer Endposition, in der ein Schieber die Stapel von Banknoten in die Kartusche drückt.

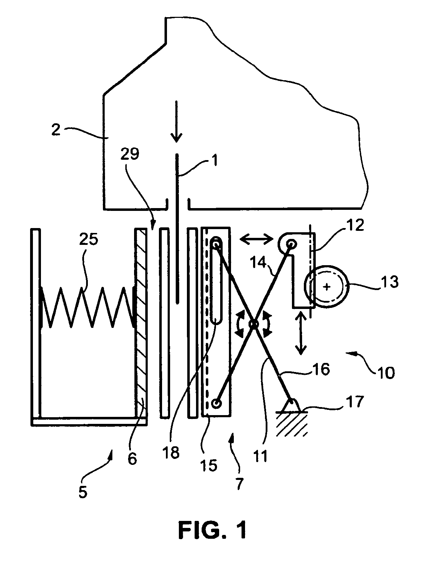

Eine Vorrichtung zur Übergabe von Banknoten 1 von einem Terminal 2 zu einer Kartusche 3 einer Rohrpostanlage 4, wie sie in den Figuren 1 bis 5 dargestellt ist, ermöglicht eine platzsparende und effektive Abschöpfung eines Bargeldbestandes in dem Terminal 2. Das Terminal 2 kann beispielsweise als ein POS-Terminal (point of sale-Terminal) ausgebildet sein, das beispielsweise an Tankstellen oder anderen Verkaufsstellen angeordnet sein kann. Das Terminal 2 kann beispielsweise als Bezahlterminal ausgebildet sein, in dem ein Geldscheinprüfer integriert angeordnet ist.

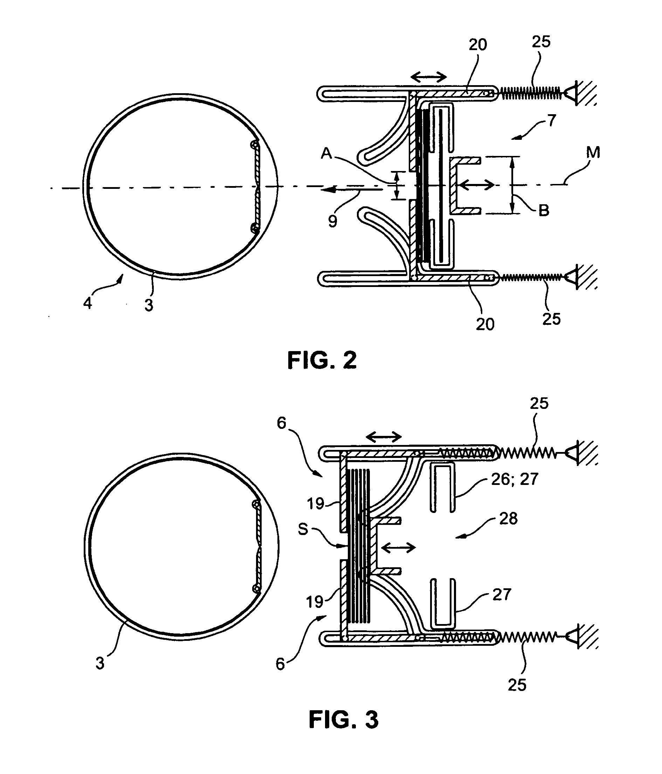

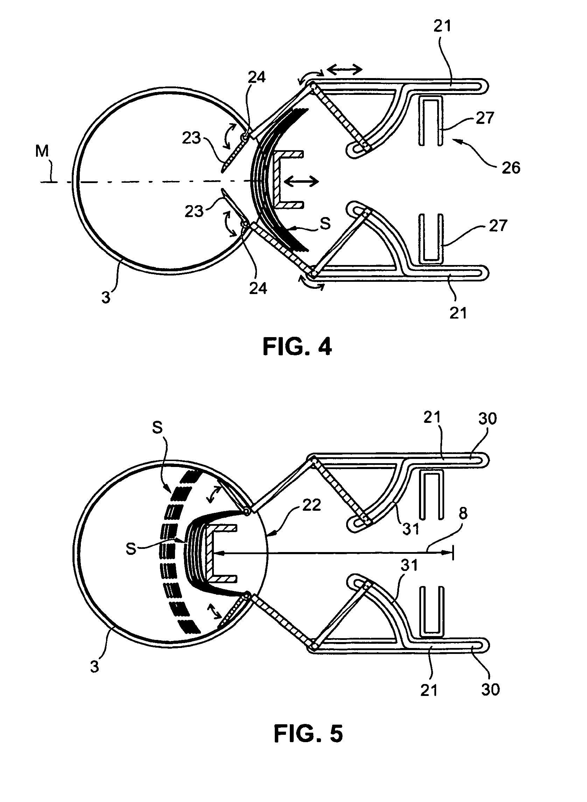

Wie aus Figur 1 zu ersehen ist, werden die Banknoten 1 einzeln von dem Terminal 2 zu einer Übergabevorrichtung 5 übergeben. Die Übergabevorrichtung 5 weist im Wesentlichen einen winkelförmigen Halter 6 und einen Schieber 7 auf, mittels derer die Banknoten 1 vorzugsweise im gestapelten Zustand entlang einer Transportbahn 8 von einer Zuführposition gemäß Figur 2 in eine Endposition innerhalb der Kartusche 3 gemäß Figur 5 förderbar sind.

Der Halter 6 und der Schieber 7 dienen als Mittel zum Transportieren für die Banknoten in Transportrichtung 9, nachdem die Banknoten 1 senkrecht zur Transportbahn 8 bzw. senkrecht zur Transportrichtung 9 von dem Terminal 2 der Übergabevorrichtung 5 zugeführt worden sind. Der Schieber 7 ist mittels eines Scherenantriebes 10 entlang der Transportbahn 8 hin- und herbewegbar ausgebildet. Wie aus Figur 1 ersichtlich ist, weist der Scherenantrieb 10 ein scherenartiges Gestänge 11 sowie eine Zahnstange 12 auf, die quer zur Transportrichtung 9 bewegbar gelagert ist. Die Zahnstange 12 wird mittels eines Elektromotors 13, der mit der Zahnstange 12 beispielsweise über ein Getriebe gekoppelt ist, zwischen den im Folgenden beschriebenen Arbeitspositionen hin- und herbewegt. Aus Figur 1 ist ersichtlich, dass die Enden der scherenartigen Gestänge 11 jeweils gelenkig gelagert sind, wobei eine erste Stange 14 gelenkig an der Zahnstange 12 und einer Druckplatte 15 des Schiebers 7 und wobei eine zweite Stange 16 gelenkig an einem Festlager 17 und in einem Langloch 18 der Druckplatte 15 geführt gelagert ist. Das Langloch 18 erstreckt sich senkrecht zur Transportbahn 8, so dass die Druckplatte 15 in Transportrichtung 9 verschiebbar ist.

Der winkelförmige Halter 6 weist einen ersten Schenkel 19 auf, der als Anlagefläche für die Banknoten 1 dient. Ferner weist der Halter 6 einen zweiten Schenkel 20 auf, der in einer Kulisse 21 geführt gelagert ist, wie im später noch beschrieben wird. Im vorliegenden Ausführungsbeispiel sind zwei gleiche Halter 6 vorgesehen, die spiegelbildlich zu einer Transportmittelebene M angeordnet sind. Die Transportmittelebene M bildet zugleich eine Querschnittsmittelebene der Kartusche 3 und verläuft mittig durch eine schlitzförmige Öffnung 22 der Kartusche 3. Zum Öffnen der Kartusche 3 sind zwei gegenüberliegende Türelemente 23 vorgesehen, die über ein Scharnier 24 nach innen schwenkbar gelagert sind.

Die gegenüberliegenden Halter 6 weisen jeweils Anlageflächen 19 auf, die im ersten Bewegungsabschnitt, das heißt zwischen der Zuführposition gemäß Figur 1 und der Zwischenposition gemäß Figur 3 in einer gemeinsamen Ebene senkrecht zur Transportrichtung 9 angeordnet sind. Ein lichter Abstand A der gegenüberliegenden Anlageflächen 19 ist kleiner ausgebildet als die Breite B des Schiebers 7, so dass ein unerwünschtes Durchdrücken des Banknotenstapels S durch den Halter 6 verhindert wird.

Die Halter 6 sind mittels einer Feder 25 vorgespannt gelagert, so dass sie die Banknoten 1 zwischen der Anlagefläche 19 und der Druckplatte 15 eingespannt sind.

Vorzugsweise werden die Banknoten 1 nicht einzeln, sondern in einem Stapel S an die Kartusche 3 übergeben. Als Stapeleinrichtung dient zum einen eine fensterförmige Aufnahme 26, der die Banknoten 1 einzeln zugeführt werden, und zum anderen der Halter 6 und der Schieber 7. Die Stapelung der Banknoten 1 wird im Folgenden anhand der Figur 2 und Figur 3 beschrieben. Nachdem eine Banknote 1 quer zur Transportrichtung 9 von dem Terminal 2 in die fensterförmige Aufnahme 6 übergeben worden ist, wird der Schieber 7 in Transportrichtung 9 betätigt. Die fensterförmige Aufnahme 6 weist zwei gegenüberliegende U-Schenkel 27 auf, wobei die freien Enden der gegenüberliegenden U-Schenkel 27 einen Abstand zueinander aufweisen, der größer ist als eine Breite B des Schiebers 7. Der Schieber 7 taucht somit in eine mittlere Ausnehmung 28 der ortsfest angeordneten fensterförmigen Aufnahme 26 ein und verschiebt die Banknote 1 in Transportrichtung 9, bis sie in einem Zwischenraum 29 zwischen den nachgiebig ausgebildeten ersten Schenkel 19 des Halters 6 und der fensterförmigen Aufnahme 26 gelangt. In diesem Zwischenraum 29 legt sich die Banknote 1 an einen bereits vorhandenen Stapel S der Banknoten 1 an, so dass nach Zurückfahren des Schiebers 7 in seine Ausgangsstellung lediglich ein Stapel S von Banknoten 1 in dem Zwischenraum 29 angeordnet sind. Es kann nun eine weitere Banknote 1 aus dem Terminal 2 zugeführt werden, die auf gleiche Weise dem Stapel S von Banknoten 1 zugeführt werden kann.

Zum Verbringen des Stapels S von Banknoten 1 aus der Zuführposition gemäß Figur 2 in die Endposition gemäß Figur 5 wird lediglich mittels des Schiebers 7 eine Stellkraft in Transportrichtung 9 aufgebracht, so dass in einem ersten Bewegungsabschnitt der Banknotenstapel S unter geradliniger Bewegung des Halters 6 in eine Zwischenposition gemäß Figur 3 bewegt wird. Während des ersten Bewegungsabschnittes liegt der Stapel S der Banknoten 1 eben an der Anlagefläche 19 des Halters 6 an. Auf einer gegenüberliegenden Seite des Stapels liegt der Schieber 7 mit seiner Druckplatte 15 an dem Banknotenstapel S an. Bis zur Zwischenposition gemäß Figur 3 wird der zweite Schenkel 20 in einem geradlinigen Abschnitt 30 der Kulisse 21 geführt. An den geradlinigen Abschnitt 30 der Kulisse 21 schließt sich in Transportrichtung 9 ein bogenförmiger Abschnitt 31 an, in dem das freie Ende des zweiten Schenkels 20 des Halters 6 in einem nachfolgenden zweiten Bewegungsabschnitt bogenförmig zwischen der Zwischenposition und der Endposition gemäß Figur 4 geführt wird. Der bogenförmige Abschnitt 31 der Kulisse 21 bewirkt ein Herausschwenken des Halters 6 aus der Transportbahn 8, so dass die Anlagefläche 19 nach und nach zur Freigabe eines Durchgangs für den Banknotenstapel S herausgeschwenkt wird. In der Endposition liegt ein freies Ende der Anlagefläche 19 im Bereich des Scharniers 24 der Türelemente 23 der Kartusche 3 an. Die Anlagefläche 19 bildet somit eine Führungsfläche für den Banknotenstapel S, kurz bevor er durch die Öffnung 22 der Kartusche 3 in dieselbe eingeführt wird.

Wie insbesondere aus Figur 4 ersichtlich ist, bewirkt das Herausschwenken des Halters 6 um einen spitzen Winkel in dem zweiten Bewegungsabschnitt des Banknotenstapels S eine definierte Wölbung desselben, so dass ein erleichtertes Einführen des Banknotenstapels S in die Kartusche 3 ermöglicht wird. Durch weiteres Bewegen des Schiebers 7 in Transportrichtung 9 kann dann der Banknotenstapel S durch die sich infolge der selbsttätig öffnenden Türelemente 23 bildenden Öffnung 22 der Kartusche 3 eingeführt werden. Nachdem der Banknotenstapel S in die Kartusche 3 eingeführt worden ist, entspannt er sich und nimmt selbsttätig eine im Wesentlichen ebene Form wieder ein.

Eine in der Kartusche 3 integrierte, nicht dargestellte, federvorgespannte Andruckplatte drückt gegen den Banknotenstapel S, damit dieser in einer definierten Lage gehalten ist.

Nachdem der Banknotenstapel S in die Kartusche 3 eingeführt worden ist, wird der Schieber 7 wieder zurückbewegt in seine Ausgangslage, wobei sich der Halter 6 aufgrund der entgegen der Stellkraft des Schiebers 7 gerichteten Federkraft wieder zurückschwenkt und in die Ausgangslage zurückbewegt wird. Im weiteren können nun weitere einzelne Banknoten 1 in der fensterförmigen Aufnahme 26 aufgenommen und nach Stapeln derselben in Form eines Stapels wieder der Kartusche 3 zugeführt werden.

### Bezugszeichenliste

- 1: Banknote
- 2: Terminal
- 3: Kartusche
- 4: Rohrpostanlage
- 5: Übergabevorrichtung
- 6: Halter
- 7: Schieber
- 8: Transportbahn
- 9: Transportrichtung
- 10: Scherenantrieb
- 11: Scherenartiges Gestänge
- 12: Zahnstange
- 13: Elektromotor
- 14: erste Stange
- 15: Druckplatte (7)
- 16: zweite Stange
- 17: Festlager
- 18: Langloch
- 19: erster Schenkel (2)
- 20: zweiter Schenkel
- 21: Kulisse
- 22: Öffnung (3)
- 23: Türelemente

- 24: Scharnier
- 25: Feder
- 26: Fensterförmige Aufnahme
- 27: U-Schenkel
- 28: Ausnehmung
- 29: Zwischenraum
- 30: geradliniger Abschnitt
- 31: bogenförmiger Abschnitt

- A: lichter Abstand
- B: Breite
- M: Transportmittelebene
- S: Stapel

## Patentansprüche

1. Verfahren zur Übergabe von Banknoten (1) von einem Terminal (2) zu einer Rohrpostanlage (4), wobei die Banknoten (1) entlang einer vorgegebenen Transportbahn (8) einer Kartusche (3) der Rohrpostanlage (4) zugeführt werden, wobei die in einem Halter (6) aufrecht angeordnete mindestens eine Banknote (1, S) durch Transportmittel aus einer Zuführposition außerhalb der Kartusche (3) in eine Endposition innerhalb der Kartusche (3) verbracht wird, wobei mindestens eine Banknote (1, S) durch einen Halter (6) in in einer ebenen Lage gehalten wird und mittels eines Schiebers (7) unter Bildung einer Wölbung in die Kartusche (3) gedrückt wird, **dadurch gekennzeichnet,**
- **dass** der Halter (6) entlang einer Führungsbahn bewegt wird,
- **dass** der Halter (6) in einem ersten Bewegungsabschnitt mittels des Schiebers (7) geradlinig in Transportrichtung (9) in eine Zwischenposition bewegt wird, währenddessen die mindestens eine Banknote (1, S) eben an einer Anlagefläche (19) des Halters (6) anliegt,
- **dass** die Anlagefläche (19) des Halters (6) in einem nachfolgenden zweiten Bewegungsabschnitt zur Freigabe eines Durchgangs für die mindestens eine Banknote (1, S) aus der linearen Transportbahn (8) herausgeschwenkt wird, so dass die mindestens eine Banknote (1, 5) mittels des Schiebers (7) unter Bildung der Wölbung in die Kartusche (3) gedrückt werden kann.

2. Verfahren nach Anspruch 1, **dadurch gekennzeichnet, dass** der Halter (6) während der Bewegung der Banknote (1) in einem entgegen der Transportrichtung (9) gerichteten vorgespannten Zustand bewegt wird, wobei der Schieber (7) mit einer vorgegebenen Stellkraft in Transportrichtung (9) auf die mindestens eine Banknote (1, S) und den Halter (6) drückt.

3. Vorrichtung zur Übergabe von Banknoten (1) von einem Terminal (2) zu einer Rohrpostanlage (4) mit Mitteln zum Transportieren der Banknoten (1, S) von dem Terminal (2) zu einer Kartusche (3) der Rohrpostanlage (4), wobei als Mittel zum Transportieren der Banknoten (1, S) ein Halter (6) mit einer Anlagefläche (18) zum Halten mindestens einer Banknote (1, S) und ein Schieber (7) zum Drücken der mindestens eine Banknote (1, S) in die Kartusche (3) vorgesehen sind, **dadurch gekennzeichnet,**
- **dass** der Halter (6) winkelförmig ausgebildet ist mit einem die Anlagefläche (19) für die mindestens eine Banknote (1, S) bildenden ersten Schenkel (19) und mit einem in einer Kulisse (21) geführten zweiten Schenkel (20),
- **dass** der Halter (6) mittels des Schiebers (7) entlang einer durch die Kulisse (21) vorgegebenen Führungsbahn bewegbar ist, wobei der zweite Schenkel (20) des Halters (6) in einem ersten Bewegungsabschnitt zwischen einer Zuführposition und einer Zwischenposition in einem geradlinigen Abschnitt (30) der Kulisse (21) geradlinig geführt ist und wobei der zweite Schenkel (20) des Halters (6) in einem zweiten Bewegungsabschnitt zwischen der Zwischenposition und einer Endposition in einem bogenförmigen Abschnitt (31) der Kulisse (21) geführt ist, so dass die Anlagefläche (19) des Halters (6) aus einer linearen Transportbahn (8) herausschwenkbar ist zur Freigabe eines Durchgangs zur Kartusche (3).

4. Vorrichtung nach Anspruch 3, **dadurch gekennzeichnet, dass** die Kulisse (21) derart ausgebildet ist, dass die Anlagefläche (19) des Halters (6) in dem zweiten Bewegungsabschnitt kontinuierlich aus der Transportbahn (8) herausgeschwenkt wird, wobei ein freier Rand der Anlagefläche (19) in der Endposition des Halters (6) im Bereich eines Randes der Öffnung (22) der Kartusche (3) positioniert ist zur Bildung einer sich in Transportrichtung (9) verjüngenden Führungsfläche für die mindestens eine Banknote (1, S).

5. Vorrichtung nach Anspruch 3 oder 4, **dadurch gekennzeichnet, dass** der Halter (6) in einem Scheitelbereich desselben schwenkbar in der Kulisse (21) gelagert ist.

6. Vorrichtung nach einem der Ansprüche 3 bis 5, **dadurch gekennzeichnet, dass** der Halter (6) entgegen der Transportrichtung (9) vorgespannt gelagert ist.

7. Vorrichtung nach einem der Ansprüche 3 bis 6, **dadurch gekennzeichnet, dass** zwei gleiche Halter (6) vorgesehen sind, die spiegelbildlich zu einer Transportmittelebene (M) angeordnet sind.

8. Vorrichtung nach einem der Ansprüche 3 bis 7, **dadurch gekennzeichnet, dass** ein lichter Abstand (A) zwischen den gegenüberliegenden Haltern (6) in der Zuführposition kleiner ist als eine Breite (B) des Schiebers (7).

9. Vorrichtung nach einem der Ansprüche 3 bis 8, **dadurch gekennzeichnet, dass** eine zwischen der Anlagefläche (19) des Halters (6) und dem Schieber (7) angeordnete fensterförmige Aufnahme (26) vorgesehen ist zur Aufnahme der Banknoten (1, S) und dass der Schieber (7) derart bewegbar ist, dass die Banknoten (1, S) aus der fensterförmigen Aufnahme (26) in Transportrichtung (9) in einem Zwischenraum (29) zwischen der fensterförmigen Aufnahme (26) und der Anlagefläche (19) des Halters (6) gedrückt werden zum Stapeln der Banknoten (1) in dem Zwischenraum (29).

10. Vorrichtung nach einem der Ansprüche 3 bis 9, **dadurch gekennzeichnet, dass** der Schieber (7) mittels eines Scherenantriebs (10) antreibbar ist, wobei eine Stange (14) des Scherenantriebs (10) mit einer quer zur Transportrichtung (9) bewegbaren Zahnstange (12) gekoppelt ist.

## Claims

1. Method of transferring banknotes (1) from a terminal (2) to a pneumatic-post installation (4), wherein the banknotes (1) are fed to a cartridge (3) of the pneumatic-post installation (4) along a predetermined transporting path (8), wherein the at least one banknote (1, S), which is arranged in an upright state in a holder (6), is shifted by transporting means out of a feeding position outside the cartridge (3) into an end position within the cartridge (3), wherein at least one banknote (1, S) is retained in a planar position by a holder (6) and is forced into the cartridge (3) by means of a slide (7), said banknote being subjected to curvature in the process, **characterized**
- **in that** the holder (6) is moved along a guide path,
- **in that**, in a first movement portion, the holder (6) is moved rectilinearly by means of the slide (7) in the transporting direction (9) into an intermediate position, while the at least one banknote (1, S) butts in a planar manner against an abutment surface (19) of the holder (6),
- **in that**, in a subsequent second movement portion, the abutment surface (19) of the holder (6) is pivoted out of the linear transporting path (8) in order to release a through-passage for the at least one banknote (1, S), and therefore the at least one banknote (1, S) can be forced into the cartridge (3) by means of the slide (7), said banknote being subjected to curvature in the process.

2. Method according to Claim 1, **characterized in that**, during movement of the banknote (1), the holder (6) is moved with prestressing directed counter to the transporting direction (9), wherein the slide (7) pushes onto the at least one banknote (1, S) and the holder (6) by way of a predetermined actuating force in the transporting direction (9).

3. Apparatus for transferring banknotes (1) from a terminal (2) to a pneumatic-post installation (4) and having means for transporting the banknotes (1, S) from the terminal (2) to a cartridge (3) of the pneumatic-post installation (4), wherein the means provided for transporting the banknotes (1, S) are in the form of a holder (6), having an abutment surface (18) for retaining at least one banknote (1, S), and a slide (7), for pushing the at least one banknote (1, S) into the cartridge (3), **characterized**
- **in that** the holder (6) is of an angular design with a first limb (19) for the at least one banknote (1, S), which forms the abutment surface (19), and with a second limb (20), which is guided in a guide track (21),
- **in that** the holder (6) can be moved, by means of the slide (7), along a guide path predetermined by the guide track (21), wherein the second limb (20) of the holder (6), in a first movement portion, is guided rectilinearly along a rectilinear portion (30) of the guide track (21) between a feeding position and an intermediate position, and wherein the second limb (20) of the holder (6), in a second movement portion, is guided over an arcuate portion (31) of the guide track (21) between the intermediate position and an end position, and therefore the abutment surface (19) of the holder (6) can be pivoted out of a linear transporting path (8) in order to release a through-passage to the cartridge (3).

4. Apparatus according to Claim 3, **characterized in that** the guide track (21) is designed such that, in the second movement portion, the abutment surface (19) of the holder (6) is pivoted continuously out of the transporting path (8), wherein a free periphery of the abutment surface (19), in the end position of the holder (6), is positioned in the region of a periphery of the opening (22) of the cartridge (3) in order to form a guide surface, tapering in the transporting direction (9), for the at least one banknote (1, S).

5. Apparatus according to Claim 3 or 4, **characterized in that** for the at least one banknote (1, S) the holder (6) has a vertex region mounted in a pivotable manner in the guide track (21).

6. Apparatus according to one of Claims 3 to 5, **characterized in that** the holder (6) is mounted with prestressing counter to the transporting direction (9).

7. Apparatus according to one of Claims 3 to 6, **characterized by** the provision of two identical holders (6) arranged in mirror-inverted fashion in relation to a transporting-means plane (M).

8. Apparatus according to one of Claims 3 to 7, **characterized in that** a clear spacing (A) between the holders (6) located opposite one another in the feeding position is smaller than a width (B) of the slide (7).

9. Apparatus according to one of Claims 3 to 8, **characterized in that** a window-like mounting (26) arranged between the abutment surface (19) of the holder (6) and the slide (7) is provided for receiving the banknotes (1, S), and **in that** the slide (7) can be moved such that the banknotes (1, S) are pushed in the transporting direction (9) out of the window-like mounting (26) into an interspace (29) between the window-like mounting (26) and the abutment surface (19) of the holder (6) in order for the banknotes (1) to be stacked in the interspace (29).

10. Apparatus according to one of Claims 3 to 9, **characterized in that** the slide (7) can be driven by means of a scissors drive (10), wherein a rod (14) of the scissors drive (10) is coupled to a rack (12) which can be moved transversely to the transporting direction (9).

## Revendications

1. Procédé pour transférer des billets de banque (1) depuis un terminal (2) jusqu'à une installation à tube pneumatique (4), les billets de banque (1) étant acheminés le long d'une voie de transport (8) prédéfinie d'une cartouche (3) de l'installation à tube pneumatique (4), l'au moins un billet de banque (1, S) disposé debout dans un support (6) étant amené par des moyens de transport hors d'une position d'alimentation à l'extérieur de la cartouche (3) dans une position finale à l'intérieur de la cartouche (3), au moins un billet de banque (1, S) étant maintenu dans une position plane par un support (6) et étant poussé dans la cartouche (3) au moyen d'un coulisseau (7) en formant une courbure, **caractérisé**
- **en ce que** le support (6) est déplacé le long d'une voie de guidage,
- **en ce que**, dans une première section de déplacement, le support (6) est déplacé au moyen du coulisseau (7) en ligne droite dans la direction de transport (9) dans une position intermédiaire, tandis que l'au moins un billet de banque (1, S) s'applique à plat sur une surface d'appui (19) du support (6),
- **en ce que** la surface d'appui (19) du support (6), dans une deuxième section de déplacement suivante pour libérer un passage pour l'au moins un billet de banque (1, S), est pivotée hors de la voie de transport linéaire (8) de telle sorte que l'au moins un billet de banque (1, S) puisse être poussé dans la cartouche (3) au moyen du coulisseau (7) en formant la courbure.

2. Procédé selon la revendication 1, **caractérisé en ce que** le support (6), pendant le déplacement du billet de banque (1), est déplacé dans un état précontraint opposé à la direction de transport (9), le coulisseau (7) poussant avec une force de réglage prédéfinie dans la direction de transport (9) sur l'au moins un billet de banque (1, S) et sur le support (6).

3. Dispositif pour transférer des billets de banque (1) depuis un terminal (2) jusqu'à une installation à tube pneumatique (4) comprenant des moyens pour transporter les billets de banque (1, S) depuis le terminal (2) jusqu'à une cartouche (3) de l'installation à tube pneumatique (4), dans lequel on prévoit comme moyens de transport des billets de banque (1, S) un support (6) avec une surface d'appui (18) pour retenir au moins un billet de banque (1, S) et un coulisseau (7) pour pousser l'au moins un billet de banque (1, S) dans la cartouche (3), **caractérisé**
- **en ce que** le support (6) est réalisé sous forme coudée avec une première branche (19) formant la surface d'appui (19) pour l'au moins un billet de banque (1, S) et avec une deuxième branche (20) guidée dans une coulisse (21),
- **en ce que** le support (6) peut être déplacé au moyen du coulisseau (7) le long d'une voie de guidage prédéfinie par la coulisse (21), la deuxième branche (20) du support (6) étant guidée en ligne droite dans une première section de déplacement entre une position d'alimentation et une position intermédiaire dans une section rectiligne (30) de la coulisse (21), et la deuxième branche (20) du support (6) étant guidée dans une deuxième section de déplacement entre la position intermédiaire et une position finale dans une section de forme courbe (31) de la coulisse (21), de telle sorte que la surface d'appui (19) du support (6) puisse être pivotée hors d'une voie de transport linéaire (8) pour libérer un passage jusqu'à la cartouche (3).

4. Dispositif selon la revendication 3, **caractérisé en ce que** la coulisse (21) est réalisée de telle sorte que la surface d'appui (19) du support (6), dans la deuxième section de déplacement, soit pivoté en continu hors de la voie de transport (8), un bord libre de la surface d'appui (19), dans la position finale du support (6), étant positionné dans la région d'un bord de l'ouverture (22) de la cartouche (3) pour former une surface de guidage pour l'au moins un billet de banque (1, S), se rétrécissant dans la direction de transport (9).

5. Dispositif selon la revendication 3 ou 4, **caractérisé en ce que** le support (6) est supporté dans une région de sommet de celui-ci de manière pivotante dans la coulisse (21).

6. Dispositif selon l'une quelconque des revendications 3 à 5, **caractérisé en ce que** le support (6) est supporté avec précontrainte à l'encontre de la direction de transport (9).

7. Dispositif selon l'une quelconque des revendications 3 à 6, **caractérisé en ce que** deux supports (6) identiques sont prévus et sont disposés avec symétrie spéculaire par rapport à un plan médian de transport (M).

8. Dispositif selon l'une quelconque des revendications 3 à 7, **caractérisé en ce qu'**une distance intérieure (A) entre les supports opposés (6) dans la position d'alimentation est inférieure à une largeur (B) du coulisseau (7).

9. Dispositif selon l'une quelconque des revendications 3 à 8, **caractérisé en ce qu'**un logement (26) en forme de fenêtre disposé entre la surface d'appui (19) du support (6) et le coulisseau (7) est prévu pour recevoir les billets de banque (1, S), et **en ce que** le coulisseau (7) peut être déplacé de telle sorte que les billets de banque (1, S) soient poussés hors du logement (26) en forme de fenêtre dans la direction de transport (9) dans un espace intermédiaire (29) entre le logement (26) en forme de fenêtre et la surface d'appui (19) du support (6) pour empiler les billets de banque (1) dans l'espace intermédiaire (29).

10. Dispositif selon l'une quelconque des revendications 3 à 9, **caractérisé en ce que** le coulisseau (7) peut être entraîné au moyen d'un entraînement à ciseaux (10), une tige (14) de l'entraînement à ciseaux (10) étant accouplée à une crémaillère (12) déplaçable transversalement à la direction de transport (9).
